# EUROPEAN PATENT SPECIFICATION

(11) **EP 3 050 424 B1**
(45) Date of publication and mention of the grant of the patent: **08.05.2019**
(21) Application number: 15184934.6
(22) Date of filing: 11.09.2015
(51) Int. Cl.: A01D 43/063

(54) **GRASS MOWER**
RASENMÄHER
TONDEUSE À GAZON

(30) Priority: 30.01.2015 JP 2015016652
(43) Date of publication of application: 03.08.2016
(73) Proprietor: Kubota Corporation, Osaka-shi, Osaka 556-8601 (JP)
(72) Inventor: NAGAI, Hiroki, SAKAI-SHI, OSAKA, 5900823 (JP); AKAI, Yuto, SAKAI-SHI, OSAKA, 5900823 (JP); YAMASHITA, Nobuyuki, SAKAI-SHI, OSAKA, 5900823 (JP)
(74) Representative: Intès, Didier Gérard André

(56) References cited:
- FR-A1- 2 862 480
- US-A1- 2005 005 587
- US-A1- 2007 056 259

## Description

### [Technical Field]

The present disclosure relates to a grass mower having a mower that can be elevated or lowered.

### [Background Art]

Conventionally, the technique of a grass mower having a mower that can be elevated or lowered is known (see e.g. Japanese Unexamined Patent Application Publication No. 2008-278782).

The grass mower disclosed in Japanese Unexamined Patent Application Publication No. 2008-278782 includes a mower (a grass mowing apparatus) which is connected via a link mechanism between front wheels and rear wheels of a self-propelling vehicle body frame. This link mechanism includes a pair of left and right front pivot links for connecting the vehicle body frame and a front portion of the mower, a pair of left and right rear pivot links for connecting the vehicle body frame and a rear portion of the mower, and a connecting link for connecting the front pivot links and the rear pivot links. The pair of left and right rear pivot links are operably coupled to a hydraulic cylinder via an operable coupling member. The link mechanism is vertically pivoted relative to the vehicle body frame by the hydraulic cylinder, whereby the mower can be elevated or lowered.

In the grass mower disclosed in Japanese Unexamined Patent Application Publication No. 2008-278782, the mower defines a cut grass discharge opening for guiding cut grass rearwards. Rearwardly of the mower, there is disposed a duct to be communicated with the cut grass discharge opening. Cut grass cut (mowed) by the mower is guided from the cut grass discharge opening of the mower to the duct and then is collected in a grass collector disposed further rearwardly.

With the grass mower configured as above, grass can be cut short with the mower being lowered to a low position. Conversely, with the mower being elevated to a high position, grass can be cut relatively long.

However, with the grass mower configured as above, when the link mechanism is pivoted upwards, the mower will be moved to an upper rear side, not directly or immediately upwards. Also, when the link mechanism is pivoted downwards, the mower will be moved obliquely to a lower front side. Therefore, when the mower is lowered, this mower will move in a direction away from the duct simultaneously also. For this reason, a gap will be formed between the mower and the duct, through which gap cut grass can drop inadvertently.

On the other end, in order to solve the above problem, there is known a method of providing a guide member included in the mower and configured to guide cut grass to the duct with the upper face thereof and a duct bottom member forming a bottom of the duct, such that the guide member and the duct bottom member may approach each other when the mower is lowered. With this arrangement, it becomes possible to prevent inadvertent dropping of grass through the gap between the mower and the duct (more particularly, between the guide member and the duct bottom member).

However, with the above-described arrangement, when the mower is elevated, this mower will move in a direction approaching the duct (to the upper rear side). Thus, there is a risk of interference occurring between the guide member and the duct bottom member. US 2005/0005587 discloses another example of a grass mower.

### [Summary]

The present invention has been made in view of the above-described state of the art and an object to be achieved thereby resides in providing a grass mower which can maintain a gap between a guide member provided in the mower and a duct bottom member provided in the duct as small as possible and which also can effectively prevent interference between the guide member and the duct bottom member, at the time of elevation or lowering of the mower.

A work vehicle as defined in claim 1 comprises:
a mower that includes a guide member for guiding cut grass rearwards with an upper face thereof and that can be elevated or lowered;
a duct that includes a duct bottom member which is vertically pivotable and that is configured to cause the duct bottom member to guide the cut grass guided by the guide member further rearwards; and
a link mechanism configured to pivot the duct bottom member in association with elevation or lowering of the mower.

With the above-described configuration, at the time of elevation or lowering of the mower, it is possible to maintain the gap between the guide member and the duct bottom member as small as possible and also to prevent interference therebetween, i.e. between the guide member and the duct bottom member, at the same time.

In the above-described configuration, preferably, the duct bottom member is pivoted not to interfere with the guide member, in association with elevation or lowering of the mower.

With the above-described configuration, at the time of elevation or lowering of the mower, it is possible to maintain the gap between the guide member and the duct bottom member as small as possible and to prevent interference therebetween, i.e. between the guide member and the duct bottom member, at the same time.

In the above-described configuration, preferably, the mower is displaced in a direction approaching the duct in association with elevation of the mower; and
the link mechanism pivots the duct bottom member to a position upwardly of the guide member, in association with the elevation of the mower.

With the above-described configuration, even if there occurs reverse flow of cut grass after being guided to the duct, inadvertent dropping of this cut grass through the gap between the guide member and the duct bottom member can be prevented.

In the above-described configuration, preferably, the guide member includes a first guide portion for guiding cut grass with the upper face thereof and a second guide portion provided at an intermediate part of the first guide portion and projecting from the upper face of the first guide portion.

With the above-described configuration, cut grass cut by the mower will be discharged further upwards, thus preventing accidental engagement of the cut grass with a leading end of the duct bottom member.

In the above-described configuration, preferably, the guide member is vertically pivotable, independently of the duct bottom member.

With the above-described configuration, cut grass collected and residing in the mower can be discharged to the outside, without necessitating any movement of the duct bottom member.

In the above-described configuration, preferably, the duct bottom member is vertically pivotable, independently of the guide member.

With the above-described configuration, cut grass collected and residing in the duct can be discharged to the outside, without necessitating any movement of the guide member.

### [Brief Description of the Drawings]

[Fig. 1] is a side view showing a grass mower according to one embodiment of the present invention,
[Fig. 2] is side view showing a mower and its periphery when the mower is located at a low position,
[Fig. 3] is a section view showing a guide member and a duct bottom member when the mower is located at the low position,
[Fig. 4] is a side view showing a duct-side link mechanism when the mower is located at the low position,
[Fig. 5] is a perspective view showing the duct-side link mechanism as seen from above,
[Fig. 6] is a perspective view showing the duct-side link mechanism as seen from below,
[Fig. 7] is side view showing the mower and its periphery when the mower is located at a high position,
[Fig. 8] is a section view showing the guide member and the duct bottom member when the mower is located at the high position,
[Fig. 9] is a side view showing the duct-side link mechanism when the mower is located at the high position,
[Fig. 10] is a section view showing how the guide member and the duct bottom member are pivoted,
[Fig. 11] is a side view showing a mower-side link mechanism and a duct-side link mechanism according to a further embodiment, and
[Fig. 12] is a side view showing a mower-side link mechanism and a duct-side link mechanism according to a further embodiment.

### [Embodiments]

In the following discussion, explanation will be made with directions denoted with arrow U, arrow D, arrow F, arrow B, arrow L and arrow R being defined as upper direction, downward direction, forward direction, backward direction, left direction and right direction, respectively. Incidentally, in the respective drawings, illustrations of members unneeded for explanation will be omitted when appropriate.

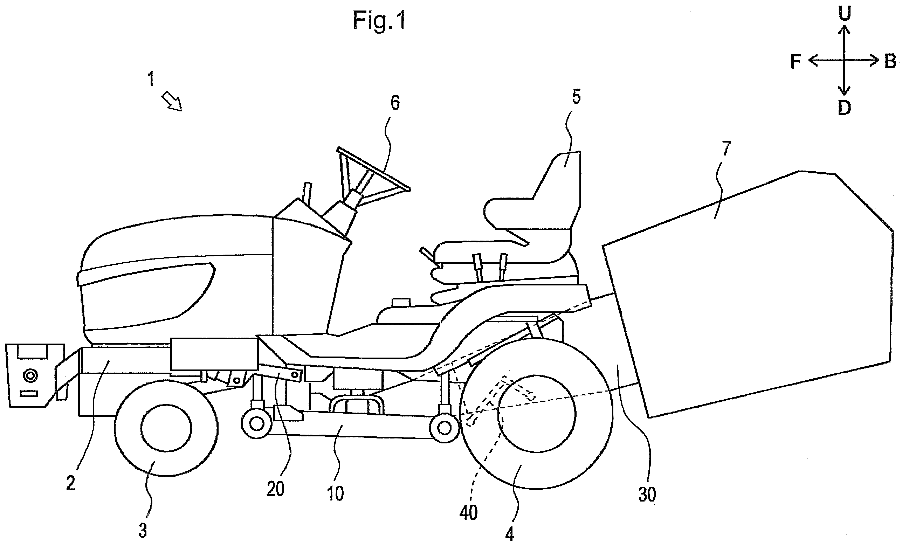

Firstly, with reference to Fig 1, a general configuration of a grass mower 1 will be explained.

The grass mower 1 is a work vehicle capable of cutting (mowing) grass (lawn) while traveling. The grass mower 1 includes, as major components thereof, a vehicle body frame 2, front wheels 3, rear wheels 4, a driver's seat 5, a steering wheel 6, a grass collector 7, a mower 10, a mower-side link mechanism 20, a duct 30, and a duct-side link mechanism 40.

A front portion of the vehicle body frame 2 is supported by the pair of left and right front wheels 3, 3. A rear portion of the vehicle body frame 2 is supported by the pair of left and right rear wheels 4, 4. At a front/rear intermediate portion of the vehicle body frame 2, the driver's seat 5 is provided, in which a worker is to be seated. The steering wheel 6 is provided forwardly of the driver's seat 5.

Downwardly of the vehicle body frame 2, there are provided the mower-side link mechanism 20 and the mower 10. The mower-side link mechanism 20 is provided for elevating or lowering the mower 10. the mower-side link mechanism 20 is connected to the mower 10.

The mower 10 is provided for effecting a grass cutting (mowing) operation with power of an engine (not shown). The mower 10 is mounted to the vehicle body frame 2 via the mower-side link mechanism 20. Also, the mower 10 is operably connected to the engine via a power transmission mechanism (not shown). This mower transmission mechanism transmits power of the engine to the mower 10. The duct 30 is disposed rearwardly of the mower 10 to be communicated with this mower 10. The grass collector 7 is disposed rearwardly of the duct 30 to be communicated with this duct 30. The duct-side link mechanism 40 is provided for moving the bottom of the duct 30 in association with elevation or lowering of the mower 10, so as to avoid interference between the mower 10 and the duct 30 at the time of elevation or lowering of the mower 10.

A worker can carry out a grass cutting (lawn cutting) operation by driving the mower 10. Cut grass cut by the mower 10 is conveyed through the inside of the duct 30 and then collected inside the grass collector 7. Further, the worker can also elevate or lower the mower 10 relative to the vehicle body frame 2 by operating the mower-side link mechanism 20.

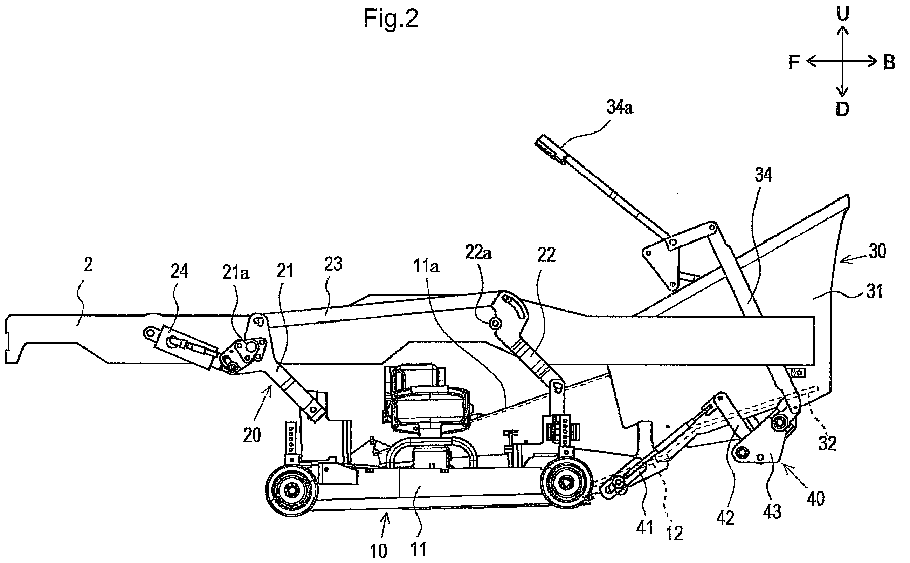

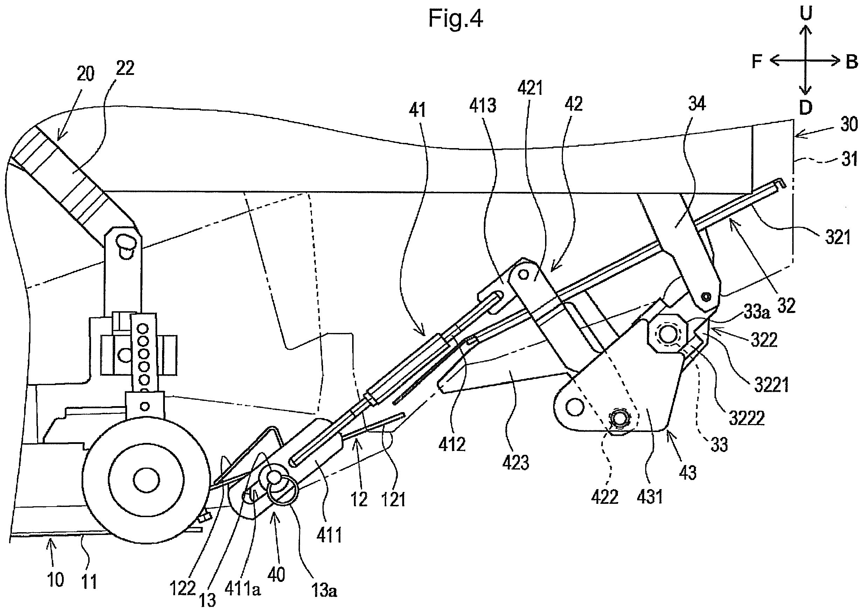

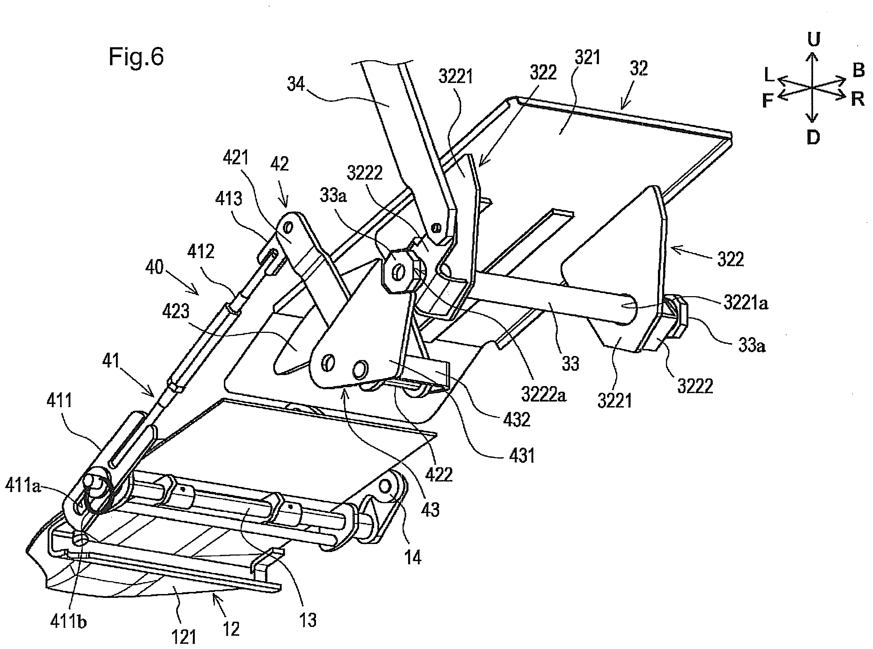

Next, with reference to Figs. 2 to 6, the configuration of the mower 10 will be explained.

The mower 10 is a utility implement for cutting (mowing) grass present underneath it to a predetermined length (height). The mower 10 is disposed at approximately center of the vehicle body frame 2 and downwardly of the same. The mower 10 is configured to be elevated and lowered by the mower-side link mechanism 20 which will be described later, relative to the vehicle body frame 2. The mower 10 includes, as major components thereof, a mower deck 11, a guide member 12, a rotational shaft 13, and a guide-member link mechanism 14.

The mower deck 11 is a main constituent of the mower 10. Inside the mower deck 11, rotary blades (not shown) are accommodated. These rotary blades, when rotatably driven, cut grass and also generate a conveying air current for guiding cut grass rearwards (specifically, in a direction toward the grass collector 7). At a rear center portion of the mower deck 11 in the right/left direction, there is formed a cut grass discharge channel 11a for guiding cut grass rearwards. This cut grass discharge channel 11a is formed to extend obliquely to an upper rear side.

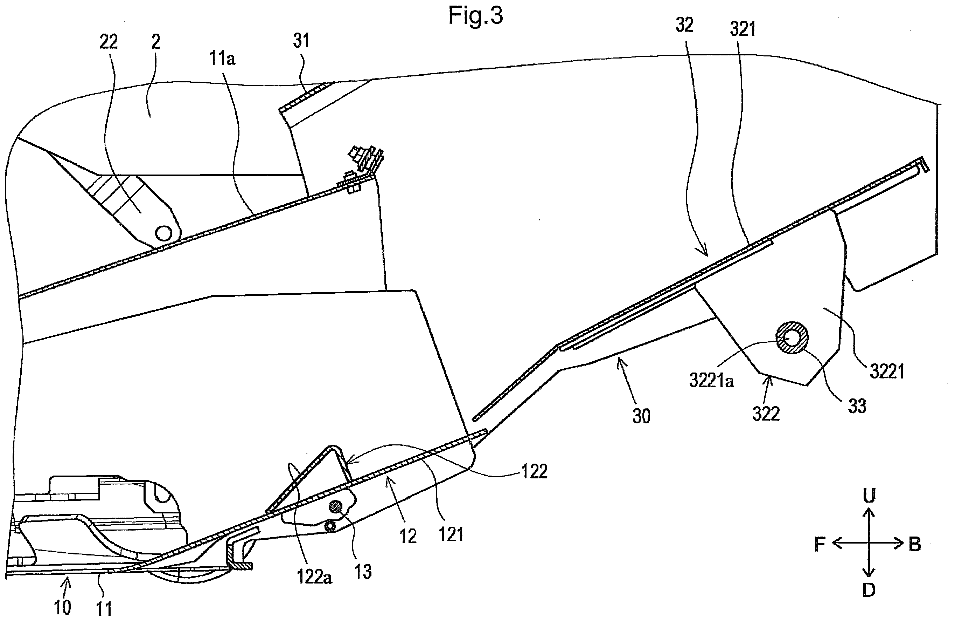

The guide member 12 shown in Figs. 3 through 6 is provided for guiding cut grass cut by the rotary blades rearwards together with the air current generated by these rotary blades. The guide member 12 is formed like a plate that extends in the direction towards the grass collector 7 (that is, the direction obliquely to the upper rear side). The guide member 12 is disposed at approximate center of the mower deck 11 in the left/right direction and at rear lower side of the mower deck 11 to extend along the bottom of the cut grass discharge channel 11a. The guide member 12 includes a first guide portion 121 and a second guide portion 122.

The first guide portion 121 is provided for guiding cut grass rearwards with the upper face thereof. The first guide portion 121 is provided in the form of an approximately rectangular plate that extends in the direction toward the grass collector 7.

The second guide portion 122 is provided for guiding cut grass guided by the first first portion 121 more upwards than the direction along the upper face of the first guide portion 121. The second guide portion 122 is provided at an intermediate part of the first guide portion 121 and projecting from the upper face of the first guide portion 121. Specifically, the second guide portion 122 is provided in the form of a triangle with its leading end oriented upwards as seen in the left/right direction and is formed to extend in the left/right direction at the front/rear intermediate portion of the first guide portion 121. A front-side face 122a of the second guide portion 122 has an angle which is more upward than the upper face of the first guide portion 121 when seen in the left/right direction (namely, formed to rise to the upper rear side from the upper face of the first guide portion 121).

The rotational shaft 13 shown in Fig. 3, Fig. 4 and Fig. 6 is provided for vertically pivotally supporting the guide member 12. The rotational shaft 13 is provided in the form of a cylinder extending in the left/right direction. The rotational shaft 13 is disposed downwardly of the guide member 12 and fixed to the lower face of the first guide portion 121. Also, the rotational shaft 13 is inserted to through holes (not shown) defined in left and right side walls of the cut grass discharge channel 11a and supports the guide member 12 vertically pivotally relative to the mower deck 11.

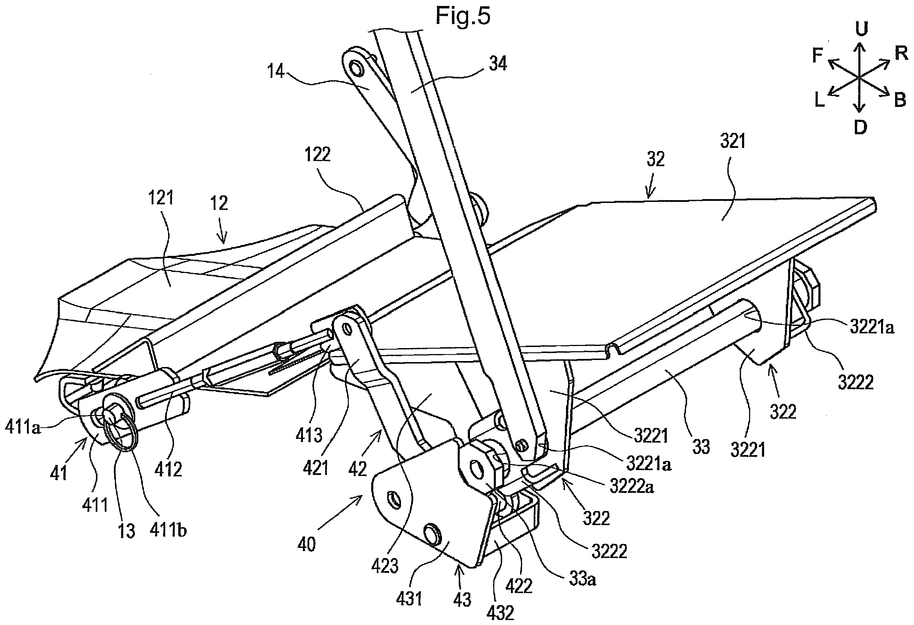

The guide-member link mechanism 14 shown in Fig. 5 is provided for vertically pivoting the guide member 12 about the axis of the rotational shaft 13. One end of the guide-member link mechanism 14 is connected to a right end of the rotational shaft 13, and the other end of the guide-member link mechanism 14 is connected to a guide-member operational portion (not shown).

Next, with reference to Fig. 2, the configuration of the mower-side link mechanism 20 will be explained.

The mower-side link mechanism 20 shown in Fig. 2 is provided for elevating or lowering the mower 10. This mower-side link mechanism 20 includes a pair of left and right front pivot links 21, a pair of left and right rear pivot links 22, a pair of left and right connecting links 23 and a cylinder 24.

The front pivot links 21 are provided for connecting the vehicle body frame 2 with front portions of the mower 10. The front pivot links 21 are disposed on opposed left and right sides of the vehicle body frame 2. The lower ends (rear ends) of the front pivot links 21 are connected to the front portions of the mower 10. Vicinities of the upper ends of the left and right front pivot links 21 are supported to the vehicle body frame 2 via a rotational shaft 21a extending in the left/right direction (the direction from the depth side to the immediate side in the plane of the Fig. 2 illustration).

The rear pivot links 22 are provided for connecting the vehicle body frame 2 and rear portions of the mower 10. The rear pivot links 22 are disposed on opposed left and right sides of the vehicle body frame 2. The vehicle body frame 2 includes rotational shafts 22a extending outwards in the left/right direction from this vehicle body frame 2 at the respective front sides of the left and right rear pivot links 22. Lower ends (rear ends) of the rear pivot links 2 are connected to the rear portions of the mower 10.

The connecting links 23 are provided for operably coupling the rear pivot links 22 with movements of the front pivot links 21. The connecting links 23 are disposed on opposed left and right sides of the vehicle body frame 2. Each connecting link 23 is provided in the form of a plate extending in the front/rear direction. The front end of the connecting link 23 is connected to the front pivot link 21 and the rear end of the connecting link 23 is connected to the rear pivot link 22.

The cylinder 24 is provided for vertically pivoting the front pivot links 21 and the rear pivot links 22. The cylinder 24 is pivotally attached to the vehicle body frame 2. And, the cylinder 24 is connected to one end (left end) of the rotational shaft 21a and rotating this rotational shaft 21a about its axis.

Next, with reference to Figs. 2 through 6, the configuration of the duct 30 will be explained.

The duct 30 is provided for guiding cut grass cut by the mower 10 rearwards. The duct 30 communicates the mower 10 with the grass collector 7. Inside the duct 30, there is formed a conveying passage for conveying cut grass cut by the mower 10. The duct 30 includes, as its major components, a duct body 31, a duct bottom member 32, a rotational shaft 33 and a link mechanism 34 for the duct bottom member.

The duct body 31 is a major constituent of the duct 30. The duct body 31 is formed to extend in the direction towards the grass collector 7. The duct body 31 is formed like a tube which has a rectangular cross section having an opened bottom. That is, the duct body 31 is formed to cover the conveying passage formed inside the duct 30 from the upper side and the opposed lateral sides thereof.

The duct bottom member 32 is provided for guiding cut grass guided by the guide member 12 further rearwards. This duct bottom member 32 is disposed along the bottom of the conveying passage formed inside the duct 30. The duct bottom member 32 includes a duct bottom member body 321 and a pair of left and right support portions 322.

The duct bottom member body 321 is a major constituent of the duct bottom member 32. The duct bottom member body 321 is formed like an approximately flat plate extending in the direction towards the grass collector 7 (that is, direction oblique to the upper rear side) and its front portion is slightly bent downwards.

The support portions 322 are provided for supporting the duct bottom member body 321. The support portions 322 are formed respectively on the right end portion and the left end portion of the duct bottom member body 321. The support portions 322 are formed at approximately front/rear center portions of the duct bottom member body 321 and downwardly of the same. Each support portion 322 includes a support portion body 3221 and a support portion outer member 3222.

The support portion body 3221 is provided in the form of a plate which extends downwards from the bottom face of the duct bottom portion body 321. The left and right support portion bodies 3221 each defines a through hole 3221a extending through the left or right side of the support portion body 3221 corresponding thereto.

The support portion outer members 3222 are members formed on the left and right outer sides of the support portion body 3221. The support portion outer member 3222 has a rectangular face facing the left/right outer side of the support portion body 3221 and opposed ends of this rectangular face are bent toward the right/left center side to extend to the support portion body 3221. The support portion outer member 3222 is formed integrally with the lower end of the support portion body 3221. In the rectangular face of the support portion outer member 3222, there is formed a through hole 3222a extending the left/right side of the support portion outer member 3222. The through hole 3222a is formed such that an axial line of this through hole 3222a is aligned with the axial line of the through hole 3221a of the support portion body 3221.

The rotational shaft 33 is provided for vertically pivotally supporting the duct bottom member 32 to the vehicle body frame 2. The rotational shaft 33 is provided in the form of a cylinder which extends in the left/right direction. The rotational shaft 33 is inserted to the through hole 3221a of the left/right support portion body 3221 and the through hole 3222a of the left/right support portion outer member 3222. The rotational shaft 33 is supported to rotational shaft support members 33a provided at the opposed ends (the left and right outer sides of the support portion outer member 3222) of the rotational shaft 33 to be pivotable about the axes thereof. The rotational shaft support member 33a is supported to the vehicle body frame 2 via an unillustrated connecting member (e.g. a transmission case). That is, the rotational shaft 33 is supported to the vehicle body frame 2 to be pivotable about the axis via the rotational shaft support member 33a and the unillustrated connecting member. The rotational shaft support member 33a has a greater diameter than the through hole 3222a of the support portion outer member 3222.

The duct bottom member link mechanism 34 is provided for vertically pivoting the duct bottom member 32 about the axis of the rotational shaft 33. The lower end of the duct bottom member link mechanism 34 is connected to the support portion outer member 3222 and the upper end of the duct bottom member link mechanism 34 is connected to the duct bottom member operational portion 34a for pivoting the duct bottom member 32 (see Fig. 2).

Next, with reference to Fig. 2, Fig. 4, Fig. 5 and Fig. 6, the configuration of the duct-side link mechanism 40 will be explained.

The duct-side link mechanism 40 is provided for pivoting the duct bottom member 32 in operative association with elevation or lowering of the mower 10, without interference with the guide member 12. The duct-side link mechanism 40 is formed to operably couple the mower 10 with the duct bottom member 32 on the left side (the immediate side in the plane of the Fig. 2 illustration) of the mower 10 and the duct 30. The duct-side link mechanism 40 includes, as its major components, a first link 41, a second link 42 and a pin support member 43.

The first link 41 constitutes a mower 10 side portion of the duct-side link mechanism 40, and this first link 41 has its front end connected to the mower 10 and extends obliquely to the upper rear side. The first link 41 includes a front link 411, an intermediate rod 412 and a rear link 413.

The front link 411 constitutes a front portion of the first link 41. The front link 411 is provided in the form of an approximately rectangular plate. At a front side intermediate portion of the front link 411, a slot 411a is formed, and in this slot 411a, the rotational shaft 13 for pivoting the guide member 12 is inserted. At a left end portion of the rotational shaft 13, there is fitted a support ring 411b for preventing detachment of the front link 411 (eventually of the first link 41) from the rotational shaft 13.

The intermediate rod 412 constitutes an intermediate portion of the first link 411. This intermediate rod 412 is provided in the form of approximately cylindrical shape, and the front end of the intermediate rod 42 is fixed to the rear end of the front link 411.

The rear link 413 constitutes a rear portion of the first link 41. This rear link 413 is provided in the form of approximately cylindrical shape, and the front end of the rear link 413 is fixed to the rear end of the intermediate rod 412.

The second link 42 constitutes a duct bottom member 32 side portion of the duct-side link mechanism 40. The second link 42 is configured to operably couple the first link 41 with the duct bottom member 32. The second link 42 includes a front link 421, a pin 422 and a push-up member 423.

The front link 421 is a portion which is connected to the first link 41. The front link 421 is provided in the form of approximately rectangular plate which extends obliquely to the lower rear side. The upper end of the front link 421 is vertically pivotally connected to the rear end of the rear link 413 of the first link 41.

The pin 422 is provided in the form of approximately cylindrical member which extends from the rear end of the front link 421 to the right side of the duct 30 (the direction toward the left/right center). The left end of the pin 422 is fixed to the front link 421.

The push-up member 423 is provided for pushing up the duct bottom member 32 in association with elevation of the mower 10. The push-up member 423 is formed to extend from the pin 422 to the bottom face of the duct bottom member 32. The upper end of the push-up member 423 is formed to extend along the bottom face of the duct bottom member 32. More particularly, the push-up member 423 is formed to come into contact with the lower face of the duct bottom member 32. And, the lower portion of the push-up member 423 is fixed to the pin 422. Namely, in the second link 42, the front link 421, the pin 422 and the push-up member 423 are formed integrally with each other.

The pin support member 43 is provided for supporting the pin 422 such that this pin 422 is pivotable about its axis. The pin support member 43 includes a flat plate 431 and a bracket 432.

The flat plate 431 is a plate-like member disposed on the left side (the outer side in the left/right direction) of the front link 421 of the second link 42. The flat plate 431 supports the left end of the pin 422 such that this is pivotable about its own axis. The flat plate 431 is fixed to the vehicle body frame 2 via a connecting member (not shown).

The bracket 432 includes a rectangular face which extends in the right direction from the left/right side face of the flat plate 431 and faces the rear side and is provided with a shape with the right end of the rectangular face being bent to the front side. The bracket 432 supports the right end of the pin 422 such that this is pivotable about its own axis. The left end of the bracket 432 is fixed to the flat plate 431.

Next, there will be explained operations of the mower-side link mechanism 20 and the duct-side link mechanism 40 in operative association with elevation or lowering of the mower 10.

Firstly, with reference to Fig. 2, Fig. 3, Fig. 7 and Fig. 8, the operations of the mower-side link mechanism 20 will be explained.

When the mower 10 is located at a low position (the position shown in Fig. 2), the guide member 12 is disposed such that its rear end is located at substantially same position as the front end of the duct bottom member 32 (see Fig. 3).

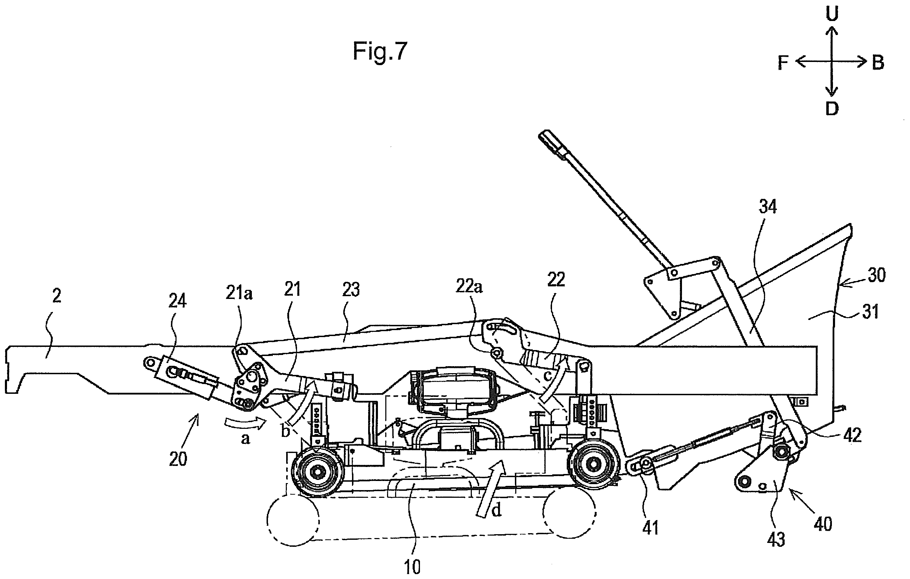

In order to elevate the mower 10 from the low position (position shown in Fig. 2) to a high position (the position shown in Fig. 7), the mower-side link mechanism 20 is operated. More specifically, the cylinder 24 will be driven to rotate the rotational shaft 21a about its axis counter-clockwise as seen in the left side view (the direction of arrow (a) shown in Fig. 7). As the left and right front pivot links 21 are connected to the opposed ends of the rotational shaft 21a, with the above-described rotation of the rotational shaft 21a, the left and right front pivot links 21 will be rotated counter-clockwise as seen in the left side view about the axis of the rotational shaft 21a (the direction of arrow (b) shown in Fig. 7).

With the above-described counter-clockwise in the left side view rotation of the rotational shaft 21a about its axis, the portions of the front pivot links 21 connected to the connecting links 23 will be displaced forwardly. Therefore, with the above-described rotation of the front pivot links 21, the connecting links 23 apply a forwardly pulling force to the rear pivot links 22. Thus, the rear pivot links 22 will be rotated counter-clockwise as seen in the left side view (the direction of arrow (c) in Fig. 7) about the axis of the rotational shaft 22a provided forwardly of the rear pivot links 22.

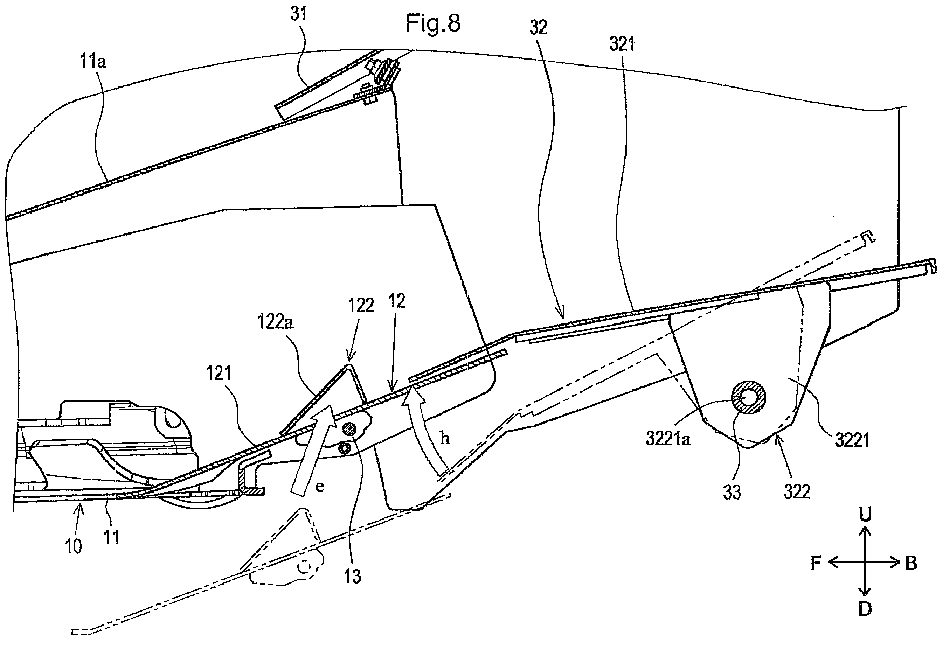

To the lower ends of the front pivot links 21, the front portions of the mower 10 are connected, and to the lower ends of the rear pivot links 22, the rear portions of the mower 10 are connected. Therefore, with the above-described movements of the front pivot links 21 and the rear pivot links 22, the mower 10 will be lifted up (elevated). In the course of this, the front pivot links 21 and the rear pivot links 22 are rotated respectively about the axis of the rotational shaft 21a and the axis of the rotational shaft 22a. Therefore, simultaneously with the elevation of the mower 10, the mower 10 will be moved to the rear side. That is, the mower 10 will be moved obliquely to the upper rear side (the direction of arrow (d) shown in Fig. 7). In the course of this, the guide member 12 of the mower 10 will also be moved in the same direction (the direction of arrow (e) shown in Fig. 8) as the mower 10 and by the same distance.

Next, with reference to Figs. 3 through 10, operations of the duct-side link mechanism 40 will be explained.

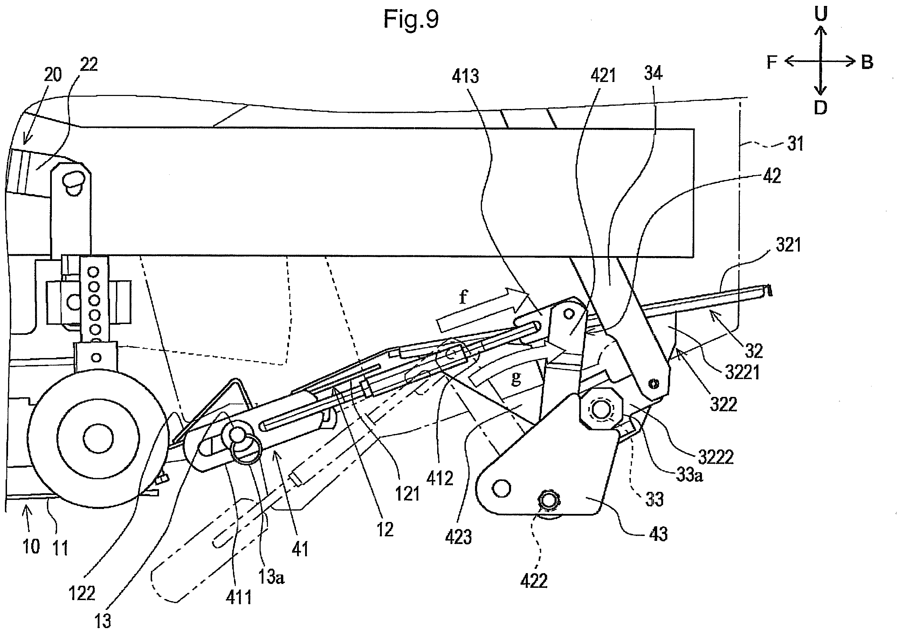

With the above-described oblique upper rearward movement of the mower 10, the first link 41 of the duct-side link mechanism 40 supported by the rotational shaft 13 is also moved obliquely to an upper rear side. And, with this oblique upper rearward movement of the first link 41, the upper end portion of the second link 42 (the front link 421 thereof) connected to the first link 41 is pushed to an upper rear side (the direction of arrow (f) shown in Fig. 9). As the pin support member 43 supporting the pin 422 fixed to the lower end portion of the front link 421 is fixed to the vehicle body frame 2, the front link 421 of the second link 42 is rotated clockwise as seen in the left side view (the direction of arrow (g) shown in Fig. 9) about the axis of the pin 422 when its upper end is pushed up rearwards. At this time, the push-up member 423 fixed to the pin 422 too is rotated clockwise as seen in the left side view about the axis of the pin 422. And, this time, the bottom face of the duct bottom member 32 is pushed up by the upper end of the push-up member 423, whereby the duct bottom member 32 is pushed upwards.

With the above-described operation of the duct-side link mechanism 40, the duct bottom member 32 is rotated upwards about the axis of the rotational shaft 33 (the direction of arrow (h) shown in Fig. 8). The guide member 12 is moved obliquely to an upper rear side, like the mower 10. As a result, the guide member 12 gets underneath the duct bottom member 32 (see Fig. 8). With this, when the mower 10 is elevated, it is possible to keep the gap formed between the guide member 12 and the duct bottom member 32 as small as possible and to prevent interference between the guide member 12 and the duct bottom member 32 at the same time. At this time, since the front portion of the duct bottom member 32 is positioned as to cover the rear portion of the guide member 12 from above, if cut grass guided into the duct 30 flows in reverse (moves from the upper rear side to the lower front side), this cut grass will move from the upper face of the duct bottom member 32 to the upper face of the guide member 12. That is, inadvertent dropping of reverse flowing cut grass through the vertical gap between the duct bottom member 32 and the guide member 12 can be prevented.

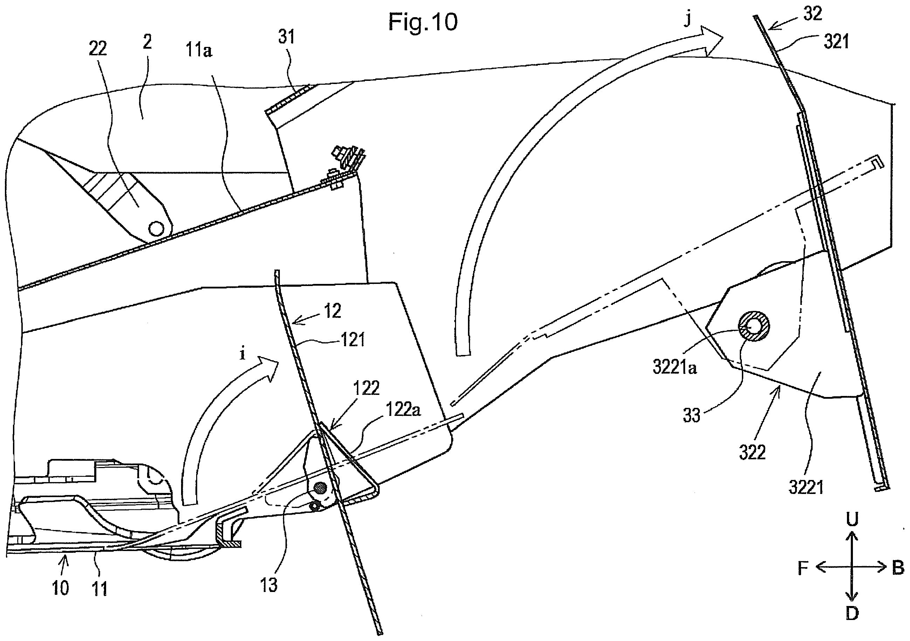

Further, the rotational shaft 13 acting as the center of rotation of the guide member 12 is merely inserted into the slot 411a of the front link 411 of the first link 41, not fixed to the first link 41 (to the front link 411 thereof). Accordingly, even when the guide member 12 is rotated about the axis of the rotational shaft 13, the first link 41 will not be moved. Therefore, in association with an operation of the guide-member link mechanism 14, the guide member 12 can be pivoted clockwise as seen in the left side view (the direction of arrow (i) shown in Fig. 10), independently of the duct-side link mechanism 40. Accordingly, cut grass accumulated in the mower 10 can be discharged to the outside (downwards) by vertically pivoting the guide member 12, without having to move the duct-side link mechanism 40, thus moving the duct bottom member 32.

Further, the rotational shaft 33 is not connected to the second link 42. Therefore, even when the duct bottom member 32 is rotated about the axis of the rotational shaft 33, the pin 422 will not be rotated about its axis. Therefore, in association with an operation of the duct bottom-member link mechanism 34, the duct bottom member 32 can be pivoted clockwise as seen in the left side view (the direction of arrow (j) shown in Fig. 10), independently of the duct-side link mechanism 40. Accordingly, cut grass accumulated in the duct 30 can be discharged to the outside (downwards) by vertically pivoting the duct bottom member 32, without having to move the guide member 12.

As described above, the grass mower 1 according to the present embodiment includes the mower 10 that can be elevated or lowered and that includes the guide member 12 configured to guide cut grass rearwards with its upper face and the duct 30 that includes the vertically pivotable duct bottom member 32 and configured to guide cut grass guided by the guide member 12 further rearwards by means of the duct bottom member 32, and the duct-side link mechanism 40 (link mechanism) configured to pivot the duct bottom member 32 in operative association with elevation or lowering of the mower 10.

With the above-described configuration, at the time of elevation or lowering of the mower 10, it is possible to maintain the gap between the guide member 12 and the duct bottom member 32 as small as possible and also to prevent interference between the guide member 12 and the duct bottom member 32 at the same time.

Further, the duct-side link mechanism 40 is configured to pivot the duct bottom member 32 in such a manner not to interfere with the guide member 12, in operative association with elevation or lowering of the mower 10.

With the above configuration, at the time of elevation or lowering of the mower 10, it is possible to maintain the gap between the guide member 12 and the duct bottom member 32 as small as possible and also to prevent interference between the guide member 12 and the duct bottom member 32 at the same time.

Further, the mower 10, in association with elevation thereof, is displaced in the direction approaching the duct 30, and the duct-side link mechanism 40, in association with the elevation of the mower 10, pivots the duct bottom member 32 to a position where this duct bottom member 32 is located upwardly of the guide member 12.

With the above configuration, even if reverse flow of cut grass guide guided into the duct 30 should occur, inadvertent dropping of this cut grass through the gap between the guide member 12 and the duct bottom member 32 can be prevented.

Further, the guide member 12 includes the first guide 121 for guiding cut grass with its upper face and the second guide portion 122 provided at an intermediate portion of the first guide portion 121 and projecting from the upper face of this first guide portion 121.

With the above configuration, cut grass cut by the mower 10 will be discharged further upwards, thus preventing accidental engagement of the cut grass with a leading end of the duct bottom member 32.

Also, the guide member 12 is configured to be vertically pivotable, independently of the duct bottom member 32.

With this configuration, cut grass collected and residing in the mower 10 can be discharged to the outside, without necessitating any movement of the duct bottom member 32.

Further, the duct bottom member 32 is configured to be vertically pivotable, independently of the guide member 12.

With the above-described configuration, cut grass collected and residing in the duct 30 can be discharged to the outside, without necessitating any movement of the guide member 12.

In the above, the embodiment of the present invention has been explained. It is noted, however, that the present invention is not limited thereto, but various modifications thereof are possible within the scope recited in the claims.

For instance, in the foregoing embodiment, the guide member 12 was described as being provided in the form of a plate which extends in the direction towards the grass collector 7 (the direction obliquely to an upper rear side). The invention is not limited to this configuration. For instance, the guide member 12 can be provided in the form of a block which has a face extending in the direction obliquely to the upper rear side. Further, the second guide portion 122 of the guide member 12 was described as being provided in the form of a triangle having its leading end oriented upwards as seen in the left/right direction. The invention is not limited to this configuration. For instance, the second guide portion 122 can be provided in the form of a downwardly widening trapezoid as seen in the left/right direction.

Further, in the foregoing embodiment, the duct bottom member body 321 of the duct bottom member 32 was described as being provided in the form of approximately flat plate extending in the direction towards the grass collector 7 (the directly obliquely to the upper rear side) and having a front portion which is slightly bent downwards. The invention is not limited to this configuration. For instance, the duct bottom member body 321 can be provided in the form of an approximately flat plate which extends simply obliquely to the upper rear side.

Further, in the foregoing embodiment, it was described that the mower 10 and the duct bottom member 32 are operably coupled with each other. The invention is not limited to this configuration. For instance, the mower-side link mechanism 20 and the duct bottom member 32 can be operably coupled with each other. Further, the configurations of the mower-side link mechanism 20 and the duct-side link mechanism 40 are not limited to those in the foregoing embodiment.

Respecting the above-described variations, these will be explained mainly with citing two specific examples thereof, with placing emphasis on differences thereof from the foregoing embodiment.

Firstly, a first variation will be explained.

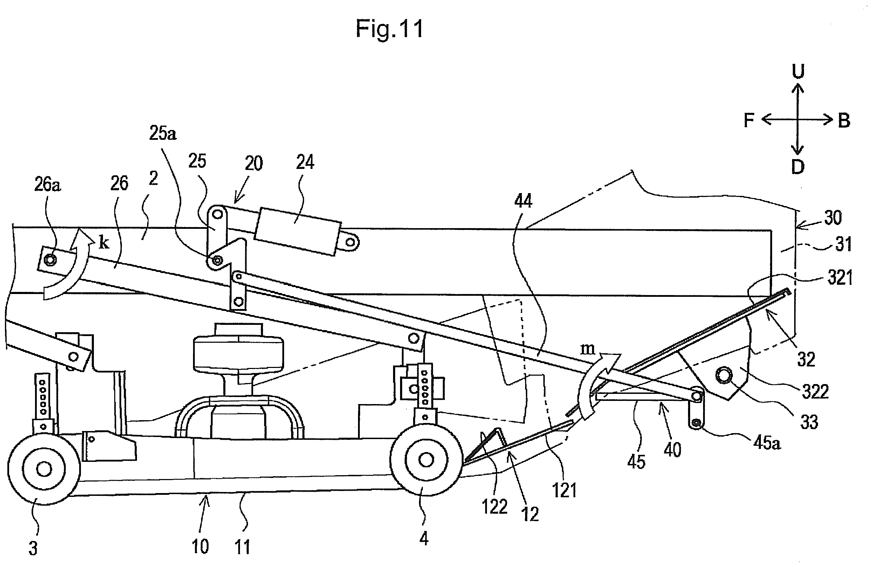

A mower-side link mechanism 20 shown in Fig. 11 includes a cylinder 24, a link 25 and a first rod 26. The cylinder 24, like the foregoing embodiment, is pivotally attached to the vehicle body frame 2. To this cylinder 24, the upper end of the link 25 is vertically pivotally connected. An approximate vertical center portion of the link 25 is vertically pivotally supported to the vehicle body frame 2 via a rotational shaft 25a. To a lower end of the link 25, the first rod 26 is vertically pivotally connected at a front/rear direction center portion of this first rod 26. The first rod 26 has its front end vertically pivotally connected to the vehicle body frame 2 via a rotational shaft 26a and has its rear end vertically pivotally connected to a rear portion of the mower 10.

A duct-side link mechanism 40 shown in Fig. 11 includes a second rod 44 and a push-up member 45. The second rod 44 has its front end vertically pivotally connected to the link 25 and is formed to extend in the direction toward the duct bottom member 32. To a rear end of the second rod 44, the push-up member 45 is vertically pivotally connected. This push-up member 45 is supported to be vertically pivotable about the axis of the pin 45a relative to the vehicle body frame 2. The front end of the push-up member 46 is formed to come into substantial contact with the lower face of the duct bottom member 32 (of the duct bottom member body 321 thereof).

When the cylinder 24 is driven, the link 25 is pivoted counterclockwise as seen in the left side view about the axis of the rotational shaft 25a. With this, the lower end of the link 25 is moved to an upper rear side. Then, the first rod 26 is rotated counterclockwise as seen in the left side view (the direction of arrow (k) shown in Fig. 11) about the axis of the rotational shaft 26a. At this time, the rear end of the first rod 26 is moved to the upper rear side. With this, the mower 10 is moved obliquely to the upper rear side.

With the above-described upper rearward movement of the lower end of the link 25, the front end of the second rod 44 is moved rearwards. At this time, the pin 45a which acts as the center of rotation of the push-up member 45, is rotated clockwise as seen in the left side view (the direction of arrow (m) shown in Fig. 11) about its own axis. With this, the push-up member 45 fixed to the pin 45a also is rotated clockwise as seen in the left side view about the axis of the pin 45a. As a result, the front end of the duct bottom member 32 is pushed upwards by the front end of the push-up member 45, whereby the duct bottom member 32 is rotated clockwise as seen in the left side view about the axis of the rotational shaft 33.

With the above-described configuration, at the time of elevation or lowering of the mower 10, it is possible to maintain the gap between the guide member 12 and the duct bottom member 32 as small as possible and also to prevent interference between the guide member 12 and the duct bottom member 32 at the same time.

Next, a second variation will be explained.

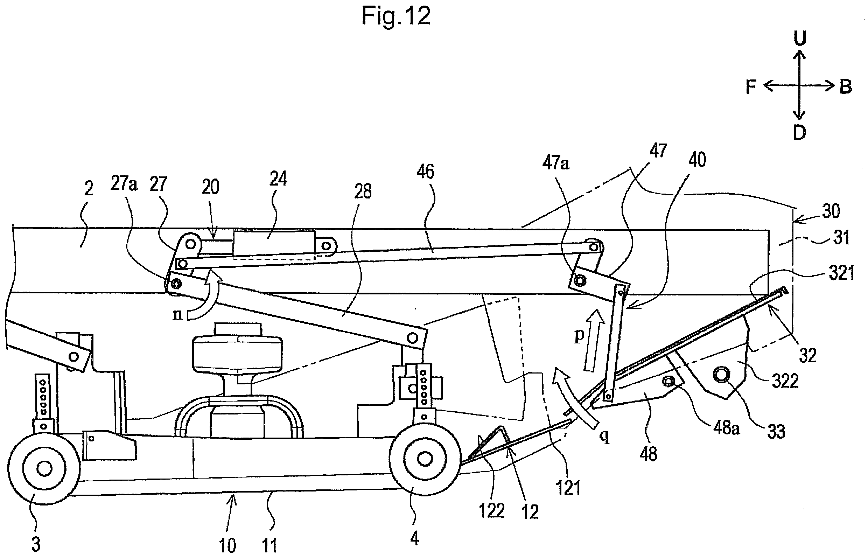

A mower-side link mechanism 20 shown in Fig. 12 includes a cylinder 24, a link 27 and a first rod 28. The cylinder 24 is fixed to the vehicle body frame 2. To this cylinder 24, the link 27 is vertically pivotally connected. The link 27 is fixed to the rotational shaft 27a and is vertically pivotally supported to the vehicle body frame 2 via this rotational shaft 27a. The first rod 26 has its front end fixed to the link 27 via the rotational shaft 27a and has its rear end vertically pivotally connected to the mower 10.

A duct-side link mechanism 40 shown in Fig. 12 includes a second rod 46, a link 47 and a push-up member 48. The second rod 46 has its front end vertically pivotally connected to the link 27 and is formed to extend approximately rearwards. To a rear end of the second rod 46, the link 47 is connected to be vertically pivotable at its upper end. The link 47 is vertically pivotally supported to the vehicle body frame 2 via a rotational shaft 47a. To a lower end of the link 47, the push-up member 48 is vertically pivotally connected. The push-up member 48 is supported to the vehicle body frame 2 to be vertically pivotable about the axis of the pin 48a. The upper end of the push-up member 48 is formed to come into substantial contact with the bottom face of the duct bottom member 32 (of the duct bottom member body 321 thereof).

When the cylinder 24 is driven, the link 27 is pivoted counterclockwise (the direction of arrow (n) shown in Fig. 12) as seen in the left side view about the axis of the rotational shaft 27a. With this, the rear end of the first rod 28 is moved to an upper rear side. Thus, the mower 10 is moved to the upper rear side.

When the link 27 is rotated counterclockwise as seen in the left side view about the axis of the rotational shaft 27a, the front end of the second rod 46 is moved forwardly. At this time, the link 47 is rotated counterclockwise as seen in the left side view about the axis of the rotational shaft 47a. With this, the lower end of the link 47 is pushed upwards (the direction of arrow (p) shown in Fig. 12). At this time, the push-up member 48 connected to the lower end of the link 47 is also rotated clockwise as seen in the left side view about the axis of the pin 48a. As a result, the duct bottom member 32 is rotated clockwise as seen in the left side view (the direction of arrow (q) shown in Fig. 12) about the axis of the rotational shaft 33 as its front portion is pushed up by the upper end of the push-up member 48.

With the above, at the time of elevation or lowering of the mower 10, it is possible to maintain the gap between the guide member 12 and the duct bottom member 32 as small as possible and also to prevent interference between the guide member 12 and the duct bottom member 32 at the same time.

## Claims

1. A grass mower (1) comprising:
a vehicle body frame (2) having a driver's seat (5);
a mower (10) that can be elevated or lowered relative to the vehicle body frame (2), the mower (10) including a mower deck (11) and a guide member (12) for guiding cut grass rearwards with an upper face thereof and that can be elevated or lowered;
a duct (30) communicating with the mower (10), the duct (30) including a duct bottom member (32);
the duct (30) being configured to cause the duct bottom member (32) to guide the cut grass guided by the guide member (12) further rearwards; **characterized in that** the duct comprises a link mechanism (40) configured to pivot the duct bottom member (32) vertically relative to the guide member (12) of the mower (10) in association with elevation or lowering of the mower (10).

2. The grass mower (1) according to claim 1, wherein the link mechanism (40) pivots the duct bottom member (32) as not to interfere with the guide member (12), in association with elevation or lowering of the mower (10).

3. The grass mower (1) according to claim 1 or 2, wherein:
the mower (10) is displaced in a direction approaching the duct (30) in association with elevation of the mower (10); and
the link mechanism (40) pivots the duct bottom member (32) to a position upwardly of the guide member (12), in association with the elevation of the mower (10).

4. The grass mower (1) according to any one of claims 1-3, wherein the guide member (12) includes a first guide portion (121) for guiding cut grass with the upper face thereof and a second guide portion (122) provided at an intermediate part of the first guide portion (121) and projecting from the upper face of the first guide portion (121).

5. The grass mower (1) according to any one of claims 1-4, wherein the guide member (12) is vertically pivotable, independently of the duct bottom member (32).

6. The grass mower (1) according to any one of claims 1-5, wherein the duct bottom member (32) is vertically pivotable, independently of the guide member (12).

## Patentansprüche

1. Rasenmäher (1), umfassend:
einen Fahrzeugkarosserierahmen (2) mit einem Fahrersitz (5),
ein Mähwerk (10), das im Verhältnis zu dem Fahrzeugkarosserierahmen (2) angehoben oder abgesenkt werden kann, wobei das Mähwerk (10) ein Mähdeck (11) und ein Führungselement (12), um geschnittenes Gras mit seiner Oberseite nach hinten zu führen und das angehoben oder abgesenkt werden kann, beinhaltet,
einen Kanal (30), der mit dem Mähwerk (10) in Verbindung steht, wobei der Kanal (30) ein Kanalbodenelement (32) beinhaltet,
wobei der Kanal (30) dazu ausgestaltet ist, zu bewirken, dass das Kanalbodenelement (32) das geschnittene Gras, das von dem Führungselement (12) geführt wird, weiter nach hinten führt,
**dadurch gekennzeichnet, dass** der Kanal einen Verbindungsmechanismus (40) umfasst, der dazu ausgestaltet ist, im Zusammenhang mit dem Anheben oder Absenken des Mähwerks (10) das Kanalbodenelement (32) vertikal im Verhältnis zu dem Führungselement (12) des Mähwerks (10) zu schwenken.

2. Rasenmäher (1) nach Anspruch 1, wobei der Verbindungsmechanismus (40) das Kanalbodenelement (32) im Zusammenhang mit dem Anheben oder Absenken des Mähwerks (10) derart schwenkt, dass es das Führungselement (12) nicht beeinträchtigt.

3. Rasenmäher (1) nach Anspruch 1 oder 2, wobei:
das Mähwerk (10) im Zusammenhang mit dem Anheben des Mähwerks (10) in eine Richtung hin zu dem Kanal (30) verlagert wird und
der Verbindungsmechanismus (40) das Kanalbodenelement (32) im Zusammenhang mit dem Anheben des Mähwerks (10) zu einer Position oberhalb des Führungselements (12) schwenkt.

4. Rasenmäher (1) nach einem der Ansprüche 1 bis 3, wobei das Führungselement (12) einen ersten Führungsabschnitt (121) zum Führen geschnittenen Grases mit seiner Oberseite und einen zweiten Führungsabschnitt (122) umfasst, der an einem Zwischenteil des ersten Führungsabschnitts (121) bereitgestellt ist und aus der Oberseite des ersten Führungsabschnitts (121) herausragt.

5. Rasenmäher (1) nach einem der Ansprüche 1 bis 4, wobei das Führungselement (12) unabhängig von dem Kanalbodenelement (32) vertikal schwenkbar ist.

6. Rasenmäher (1) nach einem der Ansprüche 1 bis 5, wobei das Kanalbodenelement (32) unabhängig von dem Führungselement (12) vertikal schwenkbar ist.

## Revendications

1. Tondeuse à gazon (1) comprenant :
un châssis de carrosserie de véhicule (2) ayant un siège de conducteur (5) ;
une tondeuse (10) qui peut être surélevée ou abaissée par rapport au châssis de carrosserie de véhicule (2), la tondeuse (10) comprenant une plate-forme de tondeuse (11) et un élément de guidage (12) pour guider le gazon coupé vers l'arrière avec une face supérieur de celui-ci et pouvant être surélevé et abaissé ;
un conduit (30) communiquant avec la tondeuse (10), le conduit (30) comprenant un élément inférieur de conduit (32) ;
le conduit (30) étant configuré pour entraîner l'élément inférieur de conduit (32) à guider le gazon coupé guidé par l'élément de guidage (12) plus vers l'arrière ;
**caractérisée en ce que** le conduit comprend un mécanisme de liaison (40) configuré pour pivoter l'élément inférieur de conduit (32) verticalement par rapport à l'élément de guidage (12) de la tondeuse (10) en association avec l'élévation ou l'abaissement de la tondeuse (10).

2. Tondeuse à gazon (1) selon la revendication 1, dans laquelle le mécanisme de liaison (40) pivote l'élément inférieur de conduit (32) de façon à ne pas interférer avec l'élément de guidage (12), en association avec l'élévation ou l'abaissement de la tondeuse (10).

3. Tondeuse à gazon (1) selon la revendication 1 ou 2, dans laquelle :
la tondeuse (10) est déplacée suivant une direction approchant le conduit (30) en association avec l'élévation de la tondeuse (10) ; et
le mécanisme de liaison (40) pivote l'élément inférieur de conduit (32) vers une position vers le haut de l'élément de guidage (12) en association avec l'élévation de la tondeuse (10).

4. Tondeuse à gazon (1) selon l'une quelconque des revendications 1 à 3, dans laquelle l'élément de guidage (12) comprend une première partie de guidage (121) pour guider le gazon coupé avec sa face supérieure et une seconde partie de guidage (122) fournie à une partie intermédiaire de la première partie de guidage (121) et faisant saillie à partir de la face supérieure de la première partie de guidage (121).

5. Tondeuse à gazon (1) selon l'une quelconque des revendications 1 à 4, dans laquelle l'élément de guidage (12) est pivotable verticalement, indépendamment de l'élément inférieur de conduit (32).

6. Tondeuse à gazon (1) selon l'une quelconque des revendications 1 à 5, dans laquelle l'élément inférieur de conduit (32) est pivotable verticalement, indépendamment de l'élément de guidage (12).
